# EUROPEAN PATENT APPLICATION

(11) **EP 1 903 456 A1**
(43) Date of publication of application: **26.03.2008**
(21) Application number: 06291414.8
(22) Date of filing: 05.09.2006
(51) Int. Cl.: G06F 17/30, G06F 9/44

(54) **System and method for contextual localization of a web site**

(71) Applicant: Amadeus S.A.S., 06902 Sophia Antipolis (FR)
(72) Inventor: Mouyade, Jean, 06550 La Roquette sur Siagne (FR); Hurteaux, Jean Baptiste, 06250 Mougins (FR)
(74) Representative: Coret, Sophie V.G.A.

(57) **Abstract**

A method of converting the content of a web object from a first language to a second language comprising the steps of:
-building a database by:
- splitting the content into one or more elements, the or each of which represent a word or symbol in the content;
- allocating a reference to each element;
- translating each element into a second language element;
- customising the second language element to make changes thereto if the second language element does not meet user expectations thereby forming a customised element; and
- storing, in the database, the or each element with its respective reference and either the customised element if this exists or if not the second language element;

- converting the or each element from the first language to the second language by:
- looking up the reference of each element in the database;
- if the reference is stored in the database selecting the customised element if this exist or if not the second language element thereby avoiding the steps of translating and customising for subsequent uses of the same element; and

- if the reference does not exist in the database carrying out the allocating, translating, customising and storing steps to convert the element from the first language to the second language.

## Description

The present invention relates to a web site contextual localization system and method, in particular but not exclusively to a translation system and method which include contextual and localization information in addition to language information.

There are many systems that exist relating to translation of web sites, BABLE and other well-known web site translation system are often used to translate information.

In addition, localization systems are also known in the art. These are used in the provision of an application adapted to the market of a customer especially in terms of language and cultural and local specificities.

The currently existing localization standards are used to store and exchange localized contents. The most widely used is the translation memory exchange (TMX) created by the open standard for container and content allowing reuse (OSCAR). TMX establishes an XML compliant format for the representation of translation memory data.

Another localization standard is known as XLIFF, this is the XML localization interchange file format conversion software. XLIFF is an XML application and begins with an XML declaration. After the XML declaration comes the XLIFF document itself enclosed within the <xliff> element. The XLIFF document is composed of one or more sections including a <header> element, a <body> element and <source> and <target> paired elements which include information relating to the original and target languages.

A standard localization process for a web application follows the following process. The web application vendor implements a web application in a reference language. The content is exported and communicated to a translation company using standardized formats TMX, XLIFF or excel for example. The localization company uses this file as an input to computer aided translation tools like Tradors or Catalyst. The translation is then sent back and converted into web application format. The web application is then deployed in a test environment for customer validation. Various iterations are required to guaranty that the translation meets the satisfaction for the customer. The disadvantages of this system, other than the fact the validation process is tedious and includes a number of iteration, is that iterations must generally involve manual interventions due to the different customer tools used to export and import data from the various propriety web applications. Tracking changes becomes a manual process as the metadata available in TMX or XLIFF is never used to track the changes. In addition the capacity of TMX to store contextual localization information using metadata is rarely used as the propriety formats used by the customer do not generally provide the same level of information. As such, there is no retention of this valuable information.

A number of patents and application have been identified which disclose systems that translate information. For example US 2004/0049374 A1 discloses a translation aid for a multi lingual web site. This application relates to a debugging system which uses files and tags in a translation process. The files and tags within the file are stored in a debug file and can be called up for translation using a text editor. The translated language text is then stored back in the file and used to compare the base or root language with the translated language of the page. This has similar disadvantages as mentioned above, i.e. that of the fact that the user must always be involved in the iteration of checking and validating the translation of any particular language to another.

One object of the present invention is to provide a web site contextual localization system and method for providing translation as well as contextual and localization information that overcome at least some of the problem associated with the prior art.

According to one aspect to the present invention, a method of converting the content of a web object from a first language to a second language comprising the steps of building a database by:
- splitting the content into one or more elements, the or each of which represent a word or symbol in the content;
- allocating a reference to each element;
- translating each element into a second language element;
- customising the second language element to make changes thereto if the second language element does not meet user expectations thereby forming a customised element; and
- storing, in the database, the or each element with its respective reference and either the customised element if this exists or if not the second language element;
converting the or each element from the first language to the second language by:
- looking up the reference of each element in the database;
- if the reference is stored in the database selecting the customised element if this exist or if not the second language element thereby avoiding the steps of translating and customising for subsequent uses of the same element; and
- if the reference does not exist in the database carrying out the allocating, translating, customising and storing steps to convert the element from the first language to the second language.

An attribute to the system is that not only is translation data stored and easily recovered but also information that is specific to a particular company or location (customization information or data) may be stored and easily recovered. This allows for fully localized translation of any information. In addition due to the manner in which the information is stored and updated the process of making changes to a web site page and translating the same becomes increasingly easier and overcomes many of the problems associated with the prior art. The number of iterations therefore required for each new page and still more importantly, each revised page, in terms of checking and validating is considerably reduced and the translation and localization effort for the web site are considerably reduced.

Reference will now be made, by way of examples to the accompanying drawings, in which:
- Figure 1 is a high level drawings of the system and method according to the present invention;
- Figure 2 shows details of a panel and translation thereof;
- Figure 3 shows details of the same panel and a different translation thereof;
- Figure 4 shows a detailed diagram of a web paged including numbers of panels and resources;
- Figure 5 is a table showing how the codes are used to determine translations and contextual information;
- Figure 6 is a flowchart the translation and customization process
- Figure 7 is detailed diagram of elements of the code used in the present invention;
- Figure 8 is a simplified diagram showing the rights of individuals associated with the system or method of the present invention;
- Figure 9 is a table for illustrating how track changes are utilized;
- Figure 10 is a flow diagram indicating how changes to a page are carried out by an administrator.

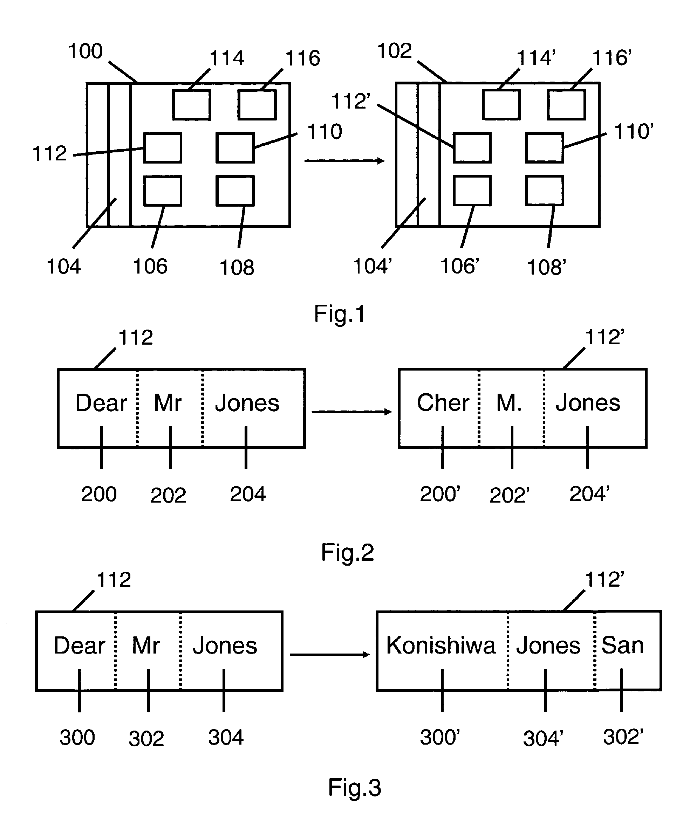

Figure 1 shows a first page 100 which is in a root or base language, for example English. Throughout the description the root language could be English and the target language will be another language. However it will be appreciated that the root language could be any starting language and the target language any other language.

The original root language 100 is translated into a second language page 102. Each page has the same basic structure and includes panels 104, 106, 108, 110, 112, 114, 116. These same panels are shown in each of the two pages and in the translated page are shown with a primed number. Each panel includes a plurality of resources, resources may be individual words, symbols, icons or whatever.

Figure 2 shows this in more details. Panel 112 in figure 1 is shown in more detail in figure 2 along with its translation 112'. Panel 112 includes three resources 200, 202 and 204. Panel 212' shows the same resources now translated into French. The resources are 200', 202', 204'. The third resource 204 is a user entered parameter which is the name of the user. This is not translated as can be seen on the diagram. However both the Dear and Mr of respective resources 200 and 202 are translated as Cher Monsieur at resources 201' and 202' respectfully. Further details of the translation process and the localization or customization element of the process will be described in greater details below.

Throughout the specification the terms, grammar localization and contextualization are used, these are forms of customization that may be required by a user. These are not the only possible types of customization and all others will be evident to the skilled man.

In figure 3 the root page 100 is being translated into Japanese in the second page 102. The same panel is shown again namely 112 and 112'. In this case the translation has been effected with a contextual and language element. In Japanese the order of the name and the title are often transposed compared to the position used in many Western languages. This can be seen as resource 304, has been converted to resource 304' but the position has changed and the resource 304 is now no longer the final resource in the given panel. Instead the resource has moved to the middle of the panel in order to insure compliance with the Japanese grammatical rule and contextual rules. The manner in which this is achieved will be described in greater detail below. However it is important to know to this point that the translation has taken into account the fact that the Japanese prefer the title to be after the name and hence Konishiwa Jones San is the translation of Dear Mr Jones.

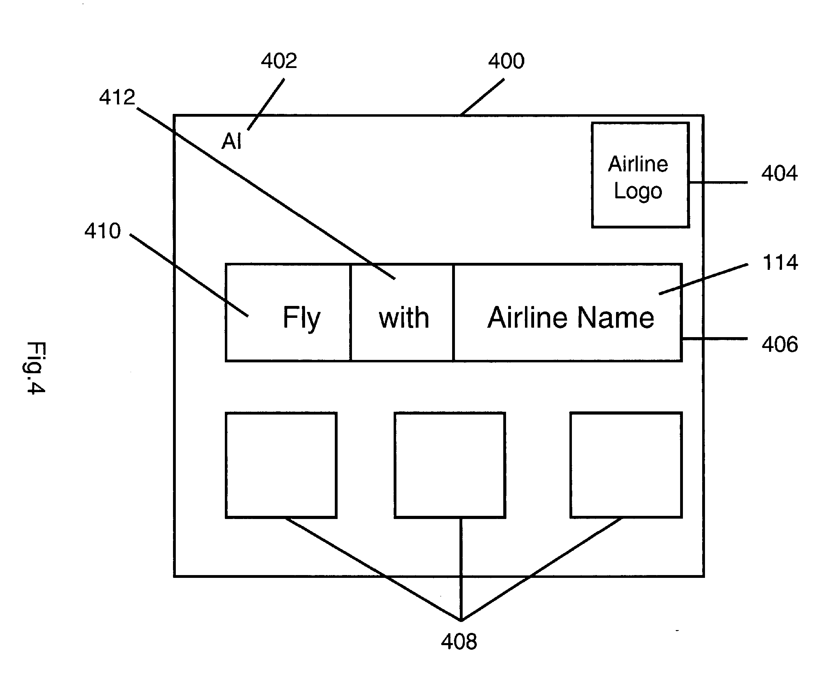

Referring now to figure 4 a detailed web page 400 is shown. The web page includes a reference Al 402 which will not be shown necessarily on the page but is an identifier of the actual web page. As previously illustrated in another diagram the web page also includes a number of panels 404, 406, 408. The panel 406 includes 3 resources, the word "fly" 410, the word "with" 412, and airline name 414. The panel 404 includes the airline logo. When a need is required to translate this page from the original root language to a target language in the present invention, each resource within a page is given a specific code. This code is a unique identifier, which relates to that specific resource in that specific panel on that specific page. The code relating to the specific resource is then stored in a table along with the root word and translation of that root road for first customers, second customers, first languages , second languages etc.. The combination of languages and customers can be as varied as required. For a specific language there may be different translation of the same root word. For example, the word "de" in French could be translated into English to be "with" "of" or "from". Accordingly there may be three different code for the word "de" in French to give those particular translations. Over and above the mere translation, a specific customer or user may have a localization or contextual element that they wish to be changed, for example they may not want the word "de" to be translated with any of the three words chosen but may have another word that they prefer to use. It is this that the present invention gives great flexibility in doing.

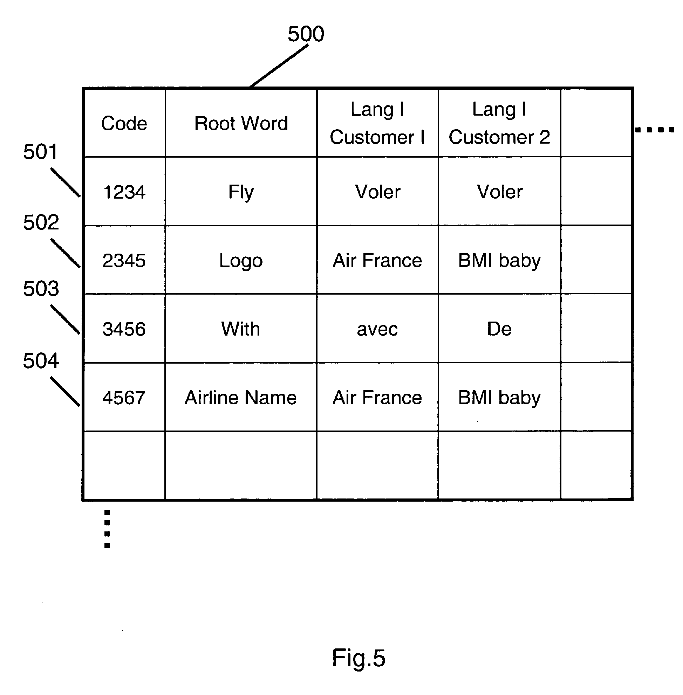

Referring now to figure 5, which shows a table 500 relating to the icon for the airline logo and the resources in panel 406 in figure 4. The first line gives a code for example 1234 for the word "fly". This may be translated into French for both language 1 customer 1 and language 1, customer 2 to be the same word i.e. "voler". This is shown in line 501 of the table 500.
In the case of root word "fly" there is no variation from customer to customer and no customization and thus no localization or contextual element for the translation. However for the logo, different choices are made by the customer, they would each use their own. This is shown in line 502 of the table. With respect to the word "with" in resource 412 of figure 4, one customer prefers to translate this word to be "avec" and another prefers to translate this word to be "de". This is allowed by the system and when translation of the root page is made for customer 2, resource 412 will be translated into the word "de" whereas for customer 1 the resource in root 412 will be translated to the word "avec". The table is populated by the administrator of each of the given customers or users who will look at the standard translation from the root words using just language and would determine whether any contextual localization or other customization changes should be made to that resource. The changes in that resource would then be registered in the table as shown in this case at line 503.

To put this simply a default online translation is one choice (i.e. "avec") or a customized translation (i.e. "de") determined by the user is another choice. Each are stored as appropriate in the table. Here the word "with" would normally be translated to "avec" but customer 2 has chosen to make a localization contextual change to the word and has registered the word "de" for that particular resource. This has a number of advantages. In particular, if the root page is later amended to change the format auto include new field, new panel, new resources. The resources would remain the same, would not need to be changed and for specific customers any localization or contextual information has been stored with respect to the code for a specific resource will remain stored in a table and can be used. Thus if the root page is changed to "glide" with airline name, all that would need to be changed is that a new resource translation (and localization or contextual translation) will be the word glide. That is to say that the resources for "with" and airline name are not changed. Hence the code will remain the same i.e. 3456 for the word "with" and 4567 for the airline name (504) as shown in table 500. A new code not shown would be introduced for the word "glide" and an appropriate translation or customization will be made.

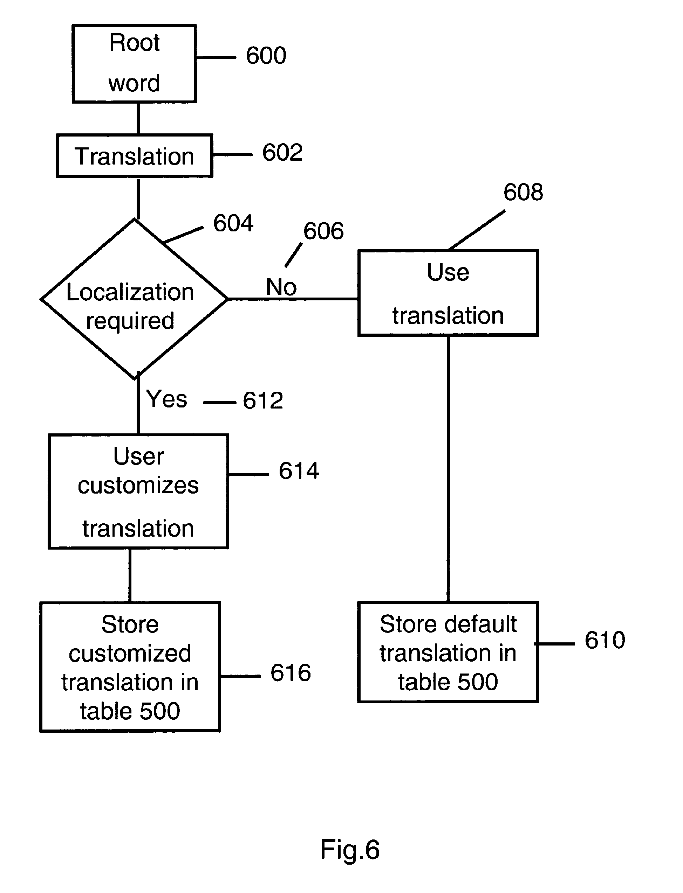

Referring now to figure 6 a flow chart of a process of translation and/or localization is shown. A root word is identified 600. This root word is then translated using an online translation resource 602. At some time later, the page including the root word that has been translated using the online translation system will be reviewed by the user. At this point a determination as to whether localization or customization of any sort is required 604. If no 606, the user will use the translation produced by the online translation software 608 and thus a default translation of the root word would be stored in the table 500, 610. On the other hand if localization is required yes 612, the user may customize or localize the translation in any way that they see fit, 614. The customized translation is then stored in table 500, 616. Thus the root word with its unique code may have different translation for different users. Translation and customization are always made at the resource level of each element of the web page. In another word the contextual localization or customization is governed at the resource level. Thus, whenever the root word with the unique code is used by the customer who required customization it is the customized translation that will always be found.

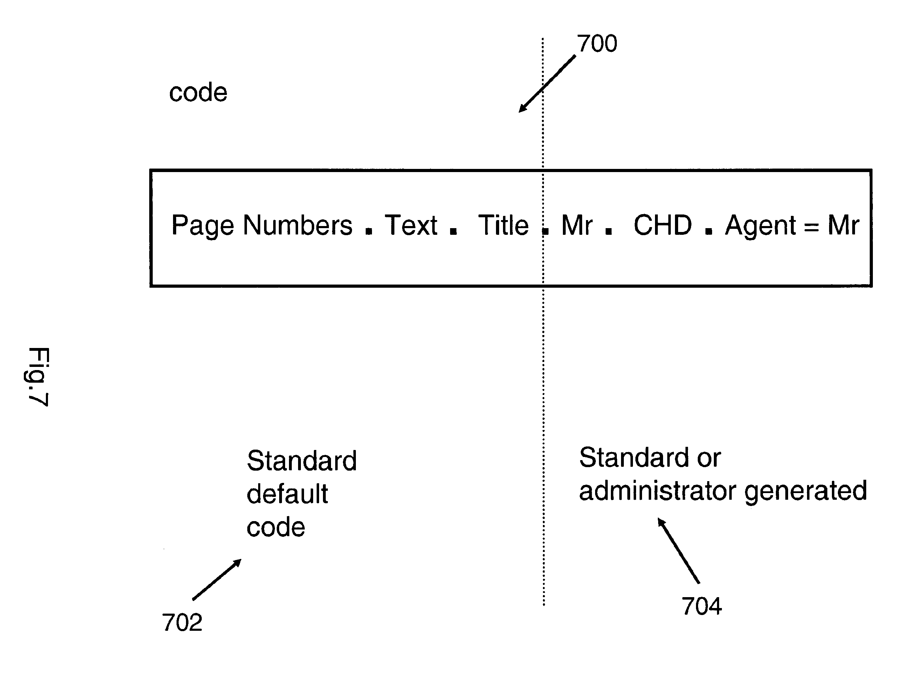

Details of the code will now be discussed in details with respect to figure 7. The code shown generally as 700 includes two parts. A standard default part 702, and a customized part 704. The code or unique identifier is compliant with the following dot notation: page° type° name° option°.

Each of these terms will be explained in greater detail. The page element of the dot notation gives a page code quadrigram, for example **HMPA** may be used for the web application home page. For resources which are applicable to multiple pages the code **ALLP** for all pages may be used. This code may be a reserved code. The type element of the dot notation relates to the type of the resource and can be of any appropriate type including the following:
a) Label: which is a text resource with possible impact on page layout if the text result becomes to large.
b) Text: this is a text resource with no impact on page layout whatever its size may be.
c) Button: this would relate to a HTML button.
d) Link: this would relate to an HTTP link.
e) Image: would relate to the URI (Uniform Resource Identifiers) of an image
f) Java script: this relates to a java script resource which may for example be use for client site validation.
g) Error: this relates to a text resource for error messages.
h) List: this relates to an enumerated resource type for example a list of countries.
i) Pattern: this is used for localized formats such as date format, numerical values formatting etc.

In the example of the code shown in figure 7, the type is shown as the second element in the code.text. The next part of the doc notation is the name. This is, as the name suggests, the name of the resource and this is usually the first few words of the text resource or other resource as applicable. Finally the option element of the dot notation can be used to distinguish resource subcategories such as country market or other subcategories that may be applicable from time to time. If necessary the dot notation can be extended still further to include additional set of resource if needed for specific applications. This would depend on the system and the requirements of the user.

Returning now to figure 7 the standard default part of the dot notation, page° number° text° title° aligns directly with the page type and name discussed above and example might be HMPA.label.from. This might be a label displayed in a home page for a web site search panel for example. The second part of the code is shown as 704. This is the option of the dot notation and can be used to customize or localize the result of the standard default code. In addition, this can be used to set common localized or customized elements to be the same. In the example shown the code mr.chd.agent=mr is the localized element which in this case shows that there is no agent, localization or customization from the first mr. In other words the final display is mr.

The result of a standard option in the dot notation i.e. customization input by the user into the table as previously described, will be that the standard default code is not used for any translation including the original word to which the code relates. Instead the customized localized version of the word will be used. For certain words which are used regularly, references to earlier codes may be used in order to minimize the length of the option element. For example if the root word is "thank you" there may be a number of time that this resource is used. Accordingly the first time the resource is customized (if it is) the code for that word would be determined and stored in a table. Should that word then be used again the reference to the earlier translation and customization may be used for example code 9876 may be directed to code 5678 where both codes relate to word "thank you".

It will be appreciate if the old codes and the details of the code related to this invention may be of a different format, size, shape or whatever depending on a particular application and the used requirements.

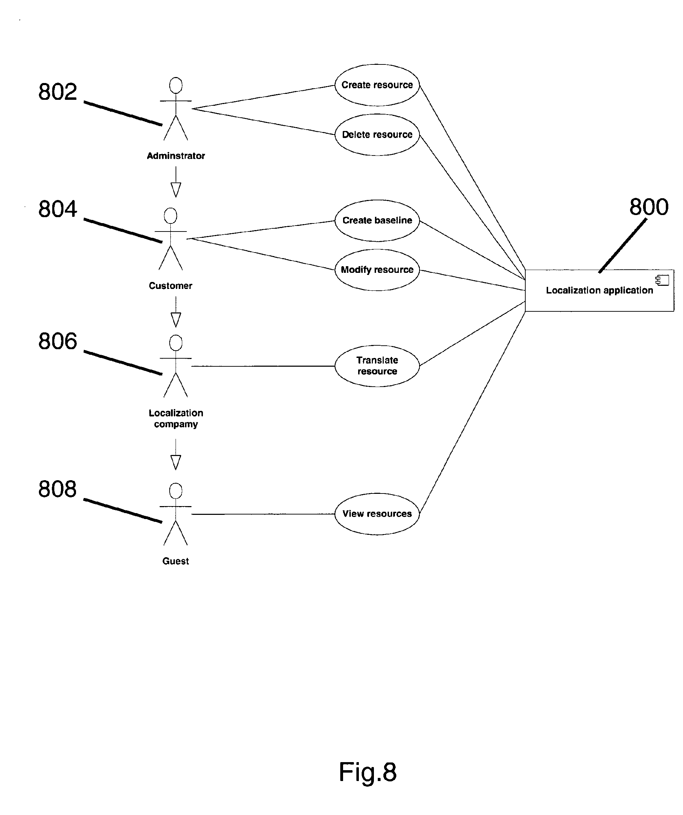

In addition to the detail described above the methodology for carrying out the customization and translation of various elements of web pages are now described. Starting from a web page which includes a plurality of resources in a root page, a new page is to be formed in a target language. Figure 8 shows a localization application which is used to produce the new page in the referenced language. An administrator 802 creates a new resource in a root language, for example a new web page or amendments to an old web page. In the later case the process will be described in greater detail below.

For a new web page with a new set of resources the customer 804 is then notified that new resources must be translated. The translation companies 806 would then translate into the selected or target language and the customer may then perform a validation of that translation by effecting the localization or customization changes to the resource. Then on the request of the customer the resource may be displayed and presented on a web site. The version provided by the customer and validated by the customer creates a base line. The base line is maintained as the details of the page currently on file and may be updated from time to time. A resource may be deleted from the table if that resource is no longer used in any of the web pages by the administrator only.

A guest 808 may view the resources in a web page or object when required.

In order to validate the resources, the web site code is switched to a localization mode. In this mode all the unique pieces of localized content are turned into HTTP links so the customer or localization agent can make changes to the resources as required by the user or customer. If no localized or customized resource is available in a specific language a default value is displayed. This default value may be the root language or an earlier translation which has not been localized in the source language.

At some point in time, the original reference or root web page may be updated, for example there is a change in the logo or a change in the look and feel of the page or a change in the content in each of the panels of the page. The administrator is responsible to indicate the nature of the changes. Any changes, would be made based on the base line that is stored. As previously indicated the base line is a snapped shot of all the resources on a page at a given point of time. The name of the base line is a unique identifier in itself to determine which version of resources is available on a given platform, for example test user acceptance or production platform.

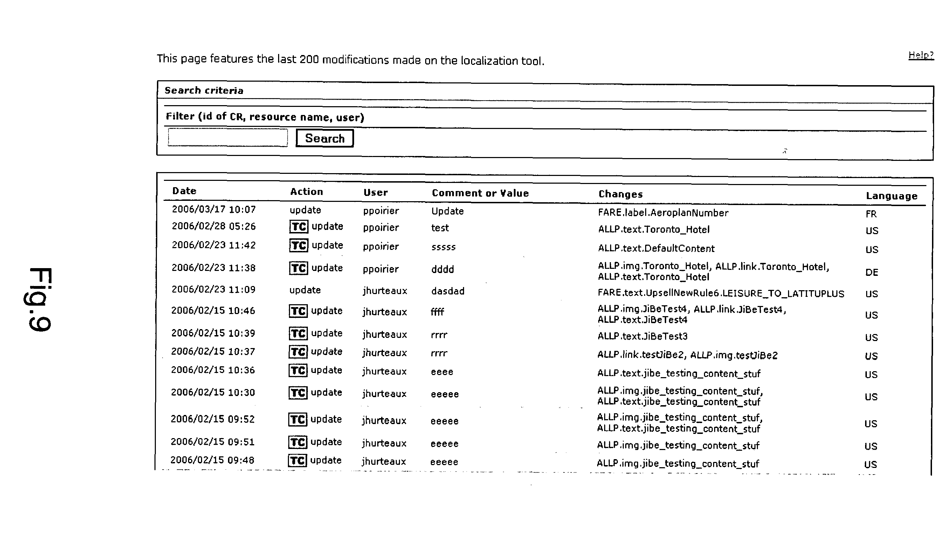

When changes are made the administrator or the user can preview the result by reloading the page on a web browser. The resources on the base line are extracted from the data base and are deployed on the target platform. The extracted resources include the set of changes that are validated and localized as appropriate. If there have been any changes from the base line to other version to the software. This can be viewed through a track changes facility that is illustrated generally in figure 9. In particular, creation of resources modification of resources, deletion of resources or creation of a new base line may be stored. Because the database relates to resources and each resource is stored in a database which its translation and any localization or customized information, if changes are made to a web page it is not necessary to update the whole page. Instead, if there are no changes to the resources in a particular part of the web page or object, this would be accessed as always from the table that already exists relating to the base line. It is only thus resources where changes are made that a new look up entry needs to be made.

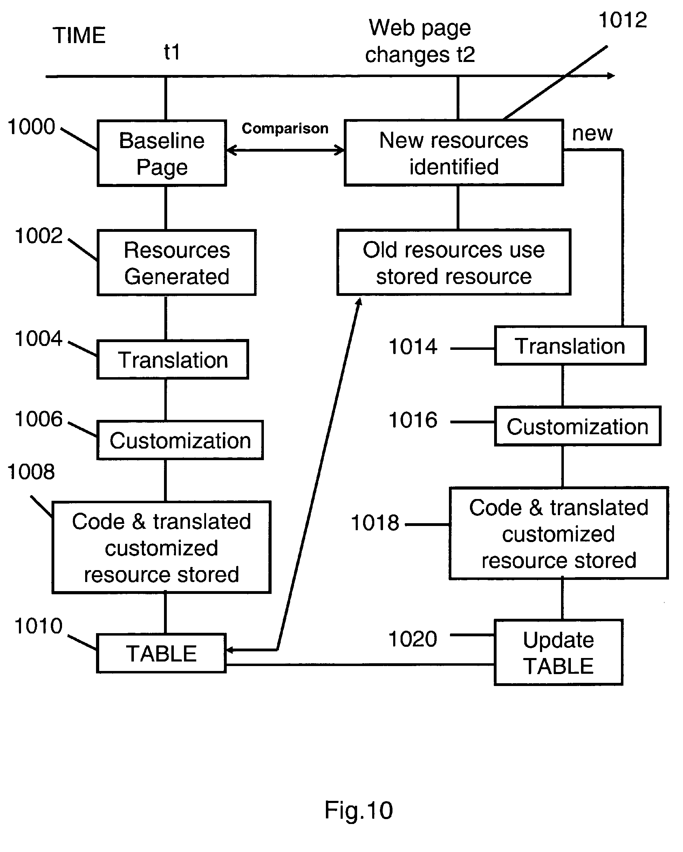

In case of error or if changes are to be cancelled, the administrator can always roll back to the base line. Each new web object or page that is updated may also be stored to keep records of all content. Referring now to figure 10, the change process is described in more detail. At a time T1, the base line page or object is identified 1000. The resources within that base line page are generated 1002. This may be then translated 1004 and customized as described above 1006. Then the resources are attributed a code in accordance with the nomenclature described above and the translated customize target element is stored with the code 1008. This is then formed into the table for example such as that shown in figure 5 1010. At a certain time later on, the web page or object changes T2. A comparison is made between the base line page and new resources are identified 1012. The old resources that are present in the web pages are looked up from the table and are not further processed as there is no need to do so. On the other hand new resources undergo translation 1014, and customization 1016. The new resources are then coded and stored as with the old resources 1018. The table is then updated using the original table and the new resources that has been processed 1020. In this way only the new resources need to be translated and customized and recorded as changes whenever any changes to the web page or web object occur.

A sample implementation is shown by way of example in relation to an e-retail engine which is a J2EE compliant application. The example e-retail engine uses JSTL localization tags which are extended to support the online localization described above. In a standard mode of JSTL each <fmt > tag is evaluated by the application into an actual value of the key provided in the correct location. For example, <fmt:message> key = quotes "HMPA.label.from."/>.

This tag will be rendered as "from" in English and "von" in German. When an additional activation parameter is sent to the request context <ƒmt > tag is evaluated to add a HTTP link to the localization application. This tag would produce the localization value of the resource ("From" in English in this example) and a HTTP link to the localized application with the key and ISO language code as parameters. The caption of the HTTP link is the actual value of the resource key in the current language.

All localized content is stored in the relation old data based using any appropriate standard for example UTF-8. The data in this example is composed of six tables including the following information.
1. History: this includes a history of all actions performed by each user in the localization application.
2. Language: this provides a list of ISO languages available in the particular user environment concerned.
3. Page code: this provides a list of all the different page codes handled by the web application and which may have been localized using the present invention.
4. Resources: this provides a list of all resources on all pages of all type, for example each and every word used on the web pages of the user.
5. Resource type: this provides types of resource allowed by the web application in question.
6. Users: this provides a list of users with their roles and access rights and who has the ability to perform which task within the localization and application for the users concerned.

The present invention has a number of advantages over all commonly known prior art systems. These advantages include the ability of the system to operate at the resource level. This has huge advantages over the prior art method by using the resource level to effect the translation and customization and storing all this information in relevant tables and data bases. A user can then obtain this information again and again. This means that extra translation and customization steps found in the prior art are not necessary. The unique identifier for each resource also provides an additional advantage and it allows easy access by the user to each and every resource and cross-referencing resources if appropriate in order to minimize again the translation and customization effort required by the user.

The data base storing the customization and localization information is valuable resource which enables reuse of tasks and translations already accomplished.

The invention has been described with reference to a translation and customization process system and method however it would be appreciated that other system and method may well adopt the unique identification and customization parameters that are used in the present invention.

It would also be appreciated that the method and apparatus shown herein are shown by way of example and different particular elements may be replaced those described herein.

## Claims

1. A method of converting the content of a web object from a first language to a second language comprising the steps of:
- building a database by:
- splitting the content into one or more elements, the or each of which represent a word or symbol in the content;
- allocating a reference to each element;
- translating each element into a second language element;
- customising the second language element to make changes thereto if the second language element does not meet user expectations thereby forming a customised element; and
- storing, in the database, the or each element with its respective reference and either the customised element if this exists or if not the second language element;
- converting the or each element from the first language to the second language by:
- looking up the reference of each element in the database;
- if the reference is stored in the database selecting the customised element if this exist or if not the second language element thereby avoiding the steps of translating and customising for subsequent uses of the same element; and
- if the reference does not exist in the database carrying out the allocating, translating, customising and storing steps to convert the element from the first language to the second language.

2. The method of claim 1, further comprising generating a web object in the second language from the elements in the second language.

3. The method of claim 2, further comprising validating the web object in the second language to ensure that the web object meets user and grammar requirements and if not generating customising elements to correct any errors.

4. The method of any one of claims 1-3, further comprising analysing the linkages between neighbouring elements and customising the order of elements to meet grammar requirements in the second language.

5. The method of any preceding claim, wherein the customising step comprises determining a customised element which satisfies user requirements relating to grammar or user specific information.

6. The method of any preceding claim, further comprising checking the database before carrying out translations or customisation to determine if the reference of a given element exist and if it does looking up the element in the second language from the database.

7. The method of any preceding claim, further comprising generating the reference using a dot notation scheme which includes indicators relating to the element.

8. The method of claim 7, further comprising, generating the dot notation to include details of the page, the element name, the element type and any other customisation information relating to the element.

9. The method of claim 7 or claim 8, further comprising generating the reference having a default portion and a customised portion, such that if there is no customised portion the conversion from the first to second language will be the translating step without the customising step.

10. The method of any preceding claims, further comprising
- changing the original web object to form an updated web object;
- using the database to translate and customise any elements which are not changed in the updated web object; and
- carrying out the allocating, translating, customising and storing steps to convert from the first language to the second language and new elements in updated web object.

11. A system comprising means adapted for carrying out the steps of the method according to any one of claims 1 to 10.

12. A device comprising means adapted for carrying out the steps of the method according to any one of claims 1 to 10.

13. A computer program comprising instructions for carrying out the steps of the method according to any one of claims 1 to 10, when said computer program is executed on a computer system.
